Europäisches Patentamt

European Patent Office

Office européen des brevets

(19)

(11) Publication number: **0 014 014**
**B1**

(12) **EUROPEAN PATENT SPECIFICATION**

(45) Date of publication of patent specification: **16.02.83**

(51) Int. Cl.³: **F 16 G 1/22,** F 16 G 5/16

(21) Application number: **80200036.4**

(22) Date of filing: **15.01.80**

(54) A composite driving belt, endless metal band for a driving belt and a method of processing such a band.

(30) Priority: **30.01.79 NL 7900707**

(43) Date of publication of application:
**06.08.80 Bulletin 80/16**

(45) Publication of the grant of the patent:
**16.02.83 Bulletin 83/7**

(84) Designated Contracting States:
**AT BE CH DE FR GB IT LU NL SE**

(56) References cited:
**US - A - 3 720 113**
**US - A - 4 080 841**

**K. Lange "Lehrbuch der Umformtechnik",**
**Springer-Verlag 1975, pages 132—134**

(73) Proprietor: **Van Doorne's Transmissie B.V.**
**Dr. Hub van Doorneweg 120**
**NL-5026 RA Tilburg (NL)**

(72) Inventor: **Hendriks, Emery Frederik Marie**
**Ten Borchwardlaan 172**
**Heeze (NL)**

(74) Representative: **Louet Feisser, Arnold Abraham**
**Alfred**
**Postbus 500**
**NL-5000 AM Tilburg (NL)**

Courier Press, Leamington Spa, England.

A composite driving belt, endless metal band for a driving belt and a method of processing such a band

The invention relates to a composite driving belt provided with a carrier and a plurality of transverse elements assembled slidably thereon, the carrier comprising one or more band packages provided with a plurality of endless metal bands disposed radially around each other.

Such a driving belt is described in U.S. Patents 3,720,113 and 4,080,841.

Such a driving belt may in particular be applied in a variable transmission, whereby the driving belt runs over pulleys, the substantial conical sheaves of which are adapted to be displaced axially relative to each other so that the running diameter of the driving belt over the pulley may vary.

In practice, such a driving belt is under a very high tension, on the one end to ensure a proper frictional contact between the pulleys and the transverse elements, and on the other end to properly conduct the transverse elements in the straight part of the driving belt.

The efficiency of such a driving belt is rather high, but there remain always internal losses in the driving belt as result of frictional forces between the various parts.

It is the object of the invention to provide a composite driving belt comprising a carrier and a plurality of transverse elements assembled slidably thereon, the efficiency of which is improved.

According to the invention at least one of the metal bands of the carrier, at least at one side thereof, is provided with a surface profiling, said profiled side abutting a band side without such surface profiling. Thus, the mutual friction between the metal bands disposed around each other is improved, which appears to have an efficiency increase.

When the driving belt runs over pulleys having different running diameters, the metal bands of the band package have a mutual speed difference, at least in situ of one of the pulleys. This speed difference may in practice be more than 1 meter per second between two successive bands (disposed around each other). Moreover, notably the inner bands are pressed onto each other with substantial force, since the pressure force on a band is built up by all bands disposed outside (i.e. therearound).

By providing in particular the more inwardly disposed bands at least at one side with a surface profiling, through which an improved lubrication between the bands will be produced, an efficiency improvement occurs.

Preferably, according to the invention, the surface profiling comprises grooves, which in practice provide good results.

According to a further feature according to the invention, the roughing value of the surface profiling lies between 0.30 and 0.75 $\mu$m Ra (measured according to CLA method) and preferably between 0.45 and 0.55 $\mu$m Ra.

In a preferred embodiment according to the invention the grooves are disposed in crossing sets. A good result is achieved when the metal bands are provided with the surface profiling only at the radial inner side.

The invention furthermore relates to an endless metal band for a driving belt which band according to the invention is provided at least at one side with a surface profiling, preferably comprising grooves. Said grooves according to the invention may be disposed in crossing sets viz. at the radial inner side of the band.

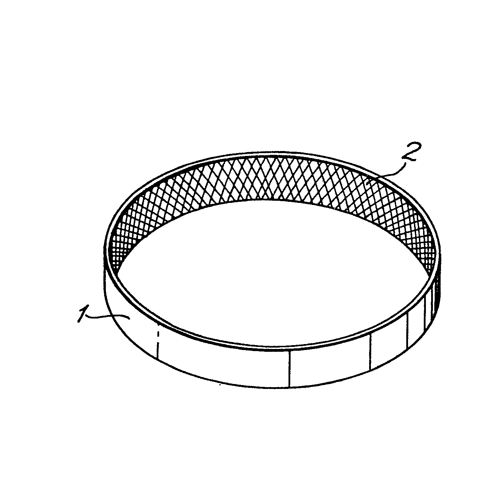

Furthermore, the invention relates to a method of applying a surface profiling on the radial inner side of an endless metal band for a driving belt. According to a feature of the invention, the metal band is rolled between rollers, one roller being fitted with a surface profiling on the circumferential surface. One embodiment of the endless metal band according to the invention will now be explained, by way of example, with reference to the accompanying drawing.

The drawing shows diagrammatically an endless metal band. The width of such a band may e.g. range between 5 and 20 mm and the thickness between 0.15 and 0.25 mm. The diameter of the band (in circular condition) may e.g. range between 150 and 300 mm. Such dimensions are not expressed in the diagrammatic drawing.

The endless band according to the drawing has a exterior side 1 and an interior side 2. In the embodiment according to the drawing the inner side 2 is provided with a surface profiling of crosswisely disposed grooves.

## Claims

1. A composite driving belt provided with a carrier and a plurality of transverse elements assembled slidably thereon, the carrier comprising one or more band packages provided with a plurality of endless metal bands disposed radially around each other, characterised in that at least one of said metal bands, at least at one side (2) thereof is provided with a surface profiling, said profiled side (2) abutting a band side (1) without such surface profiling.

2. A driving belt according to claim 1, characterised in that the surface profiling comprises grooves.

3. A driving belt according to claim 2, characterised in that the grooves are disposed in crossing sets.

4. A driving belt according to any one of claim 1—3, characterised in that the roughing value of the surface profiling ranges between 0.30 and 0.75 $\mu$m Ra (measured according to the CLA method) and preferably between 0.45 and 0.55 μm Ra.

5. A driving belt according to any one of the preceding claims, characterised in that the metal bands are provided at the radial interior side (2) with the surface profiling.

6. An endless metal band for a driving belt according to claim 1, characterised in that the metal band is provided at least at one side with a surface profiling.

7. An endless metal band according to claim 6, characterised in that the surface profiling comprises grooves.

8. An endless metal band according to claim 7, characterised in that the grooves are disposed in crossing sets.

9. An endless metal band according to any one of claims 6—9, characterized in that the roughing value of the surface profiling ranges between 0.30 and 0.75 μm Ra measured according to the CLA method) and preferably between 0.45 and 0.55 μm Ra.

10. A method of applying a surface profiling on the radial interior side of an endless metal band for a driving belt according to claim 1, characterised in that the band is rolled between rollers, one roller being provided with a surface profiling on the circumferential surface.

## Patentansprüche

1. Zusammengesetzter Treibriemen, der mit einem Träger und einer Mehrzahl Querelementen versehen ist, die gleitbar darauf angeordnet sind, wobei der Träger ein oder mehrere Bandpackungen aufweist, die mit einer Mehrzahl endloser, radial umeinander angeordneter Metallbänder versehen ist, dadurch gekennzeichnet, dass wenigstens eines dieser Metallbänder and wenigstens einer Seite (2) davon mit einer Oberflächenprofilierung versehen ist, und die profilierte Seite (2) an eine Bandseite (1) ohne solche Oberflächenprofilierung angrenzt.

2. Treibriemen nach Anspruch 1, dadurch gekennzeichnet, dass die Oberflächenprofilierung Rillen hat.

3. Treibriemen nach Anspruch 2, dadurch gekennzeichnet, dass die Rillen in Kreuzenden Gruppen angeordnet sind.

4. Treibriemen nach einem der Ansprüche 1 bis 3, dadurch gekennzeichnet, dass der Rauhheitswert der Oberflächenprofilierung im Bereich zwischen 0,30 and 0,75 μm Ra (gemessen nach dem CLA-Verfahren) and vorzugsweise zwischen 0,45 und 0,55 μm Ra liegt.

5. Treibriemen nach einem der vorhegehenden Ansprüche, dadurch gekennzeichnet, dass die Metallbänder an der radial inneren Seite (2) mit der Oberflächenprofilierung versehen sind.

6. Endloses Metallband für einen Treibriemen nach Anspruch 1, dadurch gekennzeichnet, dass das Metallband an wenigstens einer Seite mit einer Oberflächenprofilierung versehen ist.

7. Endloses Metallband nach Anspruch 6, da-durch gekennzeichnet, dass die .Oberflächenprofilierung Rillen aufweist.

8. Endloses Metallband nach Anspruch 7, dadurch gekennzeichnet, dass die Rillen in kreuzenden Gruppen angeordnet sind.

9. Endloses Metallband nach einem der Ansprüche 6 bis 8, dadurch gekennzeichnet, dass der Rauhheitswert der Oberflächenprofilierung im Bereich zwischen 0,30 und 0,75 μm Ra (gemessen nach der CLA-Methode) und vorzugsweise zwischen 0,45 und 0,55 μm Ra liegt.

10. Verfahren zum Oberflächenprofilieren der radial inneren Seite eines endlosen Metallbandes für einen Treibriemen nach Anspruch 1, dadurch gekennzeichnet, dass das Band zwischen Rollen gerollt wird, wobei eine Rolle mit einer Oberflächenprofilierung an ihrer Umfangsfläche versehen ist.

## Revendications

1. Courroie de transmission composite équipée d'un support et d'un certain nombre d'éléments transversaux montés sur ce dernier de façon à pouvoir coulisser, le support comprenant un ou plusiers empilages de bandes qui comportent plusieurs bandes métalliques sans fin disposées radialement les unes autour des autres, caractérisée en ce qu'au moins l'une des bandes métalliques est munie, au moins sur un (2) de ses côtés, d'un relief, le côté (2) muni du relief se trouvant en contact avec un côté de bande (1) démuni d'un tel relief.

2. Courroie de transmission selon la revendication 1, caractérisée en ce que le relief comporte des rainures.

3. Courroie de transmission selon la revendication 2, caractérisée en ce que les rainures sont disposées en groupes entrecroisés.

4. Courroie de transmission selon l'une quelconque des revendications 1 à 3, caractérisée en ce que la valeur de rugosité du relief est comprise entre 0,30 et 0,75 microns Ra (mesuré conformément à la méthode CLA) et de préférence entre 0,45 et 0,55 microns Ra.

5. Courroie de transmission selon l'une quelconque des revendications 1 á 4, caracterisée en ce que les bandes métalliques sont munies due relief sur le côté radialement intérieur (2).

6. Bande métallique sans fin pour une courroie de transmission selon la revendication 1, caractérisée en ce que la bande métallique est munie sur au moins un côté d'un relief.

7. Bande métallique sans fin selon la revendication 6, caractérisée en ce que le relief comporte des rainures.

8. Bande métallique sans fin selon la revendication 7, caractérisée en ce que les rainures sont disposées en groupes entrecroisés.

9. Bande métallique sans fin selon l'une quelconque des revendications 6 à 9, caractérisée en ce que la valeur de rugosité du relief est comprise entre 0,30 et 0,75 microns Ra (mesuré conformément à la méthode CLA) et de préférence entre 0,45 et 0,55 microns Ra.

10. Procédé pour réaliser un relief sur le côté radialment intérieur d'une bande métallique sans fin pour une courroie de transmission selon la revendication 1, caractérisé en ce que la bande est roulée entre des rouleaux, un rouleau étant muni d'un relief sur la surface circonférentielle.